# EUROPÄISCHE PATENTSCHRIFT

(11) **EP 3 956 192 B1**
(45) Veröffentlichungstag und Bekanntmachung des Hinweises auf die Patenterteilung: **29.11.2023**
(21) Anmeldenummer: 20732113.4
(22) Anmeldetag: 20.05.2020
(51) Int. Cl.: B61D 33/00, B61D 37/00, B60N 3/00

(54) **VORRICHTUNG FÜR EIN SCHIENENFAHRZEUG UND SCHIENENFAHRZEUG**
DEVICE FOR A RAIL VEHICLE, AND RAIL VEHICLE
DISPOSITIF POUR UN VÉHICULE SUR RAILS, ET VÉHICULE SUR RAILS

(30) Priorität: 17.06.2019 DE 102019208758
(43) Veröffentlichungstag der Anmeldung: 23.02.2022
(73) Patentinhaber: Siemens Mobility GmbH, 81739 München (DE)
(72) Erfinder: WANCZURA, Stefan, 45665 Recklinghausen (DE)
(74) Vertreter: Siemens Patent Attorneys
(86) Internationale Anmeldenummer: PCT/EP2020/064148
(87) Internationale Veröffentlichungsnummer: WO 2020/254050

(56) Entgegenhaltungen:
- EP-A1- 3 456 603
- WO-A1-2020/033982
- CN-A- 107 745 722
- DE-A1-102013 208 362

## Beschreibung

Die Erfindung betrifft eine Vorrichtung zum Anbinden eines Tisches an eine Seitenwand eines Schienenfahrzeugs für eine quer zur Fahrtrichtung angeordnete Sitzgruppe nach dem Oberbegriff von Anspruch 1. Die Erfindung betrifft ferner ein Schienenfahrzeug mit einer solchen Vorrichtung.

Eine solche Vorrichtung ist beispielsweise aus der EP 3 456 603 A1 bekannt. Ferner zeigt die CN 107 745 722 A eine weitere Ausführungsform für eine Vorrichtung zum Anbinden eines Tisches an eine Seitenwand eines Schienenfahrzeugs.

Schienenfahrzeuge zur Beförderung von Personen weisen in der Regel Sitzgruppen aus gegenüberliegenden, quer zur Fahrtrichtung angeordneten Sitzen auf, zwischen denen häufig ein fest installierter Tisch angeordnet ist. Solche Tische müssen die Beanspruchungen des Betriebs sowie definierten außergewöhnlichen Lasten (z.B. Vandalismus) ohne Beschädigung aushalten. Bei Kollisionen der Schienenfahrzeuge mit Hindernissen und daraus resultierenden hohen Längsverzögerungen treten durch den Aufprall der Insassen an der Tischplatte relativ hohe Lasten auf. Die Befestigung des Tisches im Schienenfahrzeug soll dabei eine kontrollierte Nachgiebigkeit der Tischplatte bereitstellen und die Aufprallkräfte zur Vermeidung oder Reduktion von Verletzungen begrenzen.

Eine Aufgabe der vorliegenden Erfindung besteht darin, eine Vorrichtung zum Anbinden eines Tisches an eine Seitenwand eines Schienenfahrzeugs zu schaffen, die eine sichere und zuverlässige Stützstruktur bereitstellt, welche insbesondere eine Verletzungsgefahr für Fahrgäste im Betrieb eines Schienenfahrzeugs gering hält.

Die Aufgabe wird durch eine Vorrichtung und ein Schienenfahrzeug mit den Merkmalen des jeweiligen unabhängigen Patentanspruchs gelöst. Vorteilhafte Ausgestaltungen der Vorrichtung sind in den abhängigen Patentansprüchen angegeben.

Gemäß der Erfindung weist eine Vorrichtung zum Anbinden eines Tisches an eine Seitenwand eines Schienenfahrzeugs eine Tischplatte mit einer Oberseite und einer Unterseite sowie einen Biegebalken auf, der an der Unterseite der Tischplatte angeordnet ist. Der Biegebalken ist an einer ersten und einer zweiten Kopplungsposition mit der Tischplatte gekoppelt und dazu ausgebildet, die Tischplatte mittels einer Seitenwandanbindung an der Seitenwand des Schienenfahrzeugs zu befestigen. Der Biegebalken weist eine gezielt eingebrachte Schwächungsstruktur auf, die eine vorgegebene Elastizität des Biegebalkens ausbildet. Die Schwächungsstruktur ist so eingerichtet, dass sie bezogen auf einen an der Seitenwand angeordneten Zustand der Vorrichtung bei einem Auftreten einer in Fahrtrichtung des Schienenfahrzeugs auf die Tischplatte wirkenden Kraft eine durch die Schwächungsstruktur vorgegebene Umformung des Biegebalkens und Rotation der Tischplatte relativ zu der Seitenwand zulässt.

Mittels der beschriebenen Vorrichtung ist jeweils eine sichere und zuverlässige Stützstruktur zur Seitenwandanbindung eines Tisches für eine quer zur Fahrtrichtung angeordnete Sitzgruppe eines Schienenfahrzeugs realisierbar. Die Vorrichtung erlaubt es, mit hoher Stabilität die Verletzungsgefahr der Fahrgäste im Betrieb, insbesondere bei Kollisionen, deutlich zu vermindern, ohne dass Komforteinbußen hingenommen werden müssen. Die Vorrichtung ist gemäß ihrem Aufbau so ausgebildet, dass Kräfte bzw. Drehmomente, die an der Tischplatte wirken, durch eine kontrollierte Verformung des Biegebalkens zuverlässig aufgenommen und sicher abgeleitet werden. Eine Widerstandskraft der Tischplatte, die bei einer Kollision auf den oder die auftreffenden Fahrgäste wirkt, kann dadurch gering gehalten werden.

Eine solche Verformung oder Umformung ist zum Beispiel bis zu einem gewissen Maße eine elastische Formänderung, die nach erfolgter Krafteinwirkung reversibel ihren Ausgangszustand wieder einnimmt. Darüber hinaus ist die Umformung zum Beispiel eine plastische Formänderung, die nach erfolgter Krafteinwirkung den verformten Zustand beibehält und gegebenenfalls ausgetauscht werden muss, um erneut einen Grundzustand der Vorrichtung einzurichten. Der Biegebalken ist dazu eingerichtet mit einer definierten zulässigen Maximalkraft plastisch verformt werden zu können.

Gemäß der Erfindung weist der Biegebalken eine Oberseite, die der Tischplatte zugewandt ist, und eine Unterseite auf, die der Tischplatte abgewandt ist. Der Biegebalken weist ferner zwei Seitenwände auf, die jeweils die Oberseite mit der Unterseite verbinden. Die Schwächungsstruktur umfasst eine Mehrzahl von Sicken, die an zumindest einer Seitenwand des Biegebalkens ausgebildet ist. Der Biegebalken ist zum Beispiel bezogen auf einen Querschnitt oder eine äußere längliche Geometrie vierkantig oder rechteckig ausgebildet.

Alternativ ist der Biegebalken zum Beispiel bezogen auf einen Querschnitt oval, rund oder kreisförmig ausgebildet.

Die Ausrichtung und Orientierung der jeweiligen Seiten des Biegebalkens und anderer Komponenten beziehen sich auf einen ordnungsgemäß eingebauten Zustand der Vorrichtung in einem betriebsbereiten Schienenfahrzeug. Begriffe, wie "oben", "unten", "Oberseite", "Unterseite", "Fahrtrichtung", "Querrichtung", beziehen sich daher auf eine vertikale oder horizontale Ausrichtung. Somit erstreckt sich zum Beispiel die Tischplatte im Wesentlichen in einer horizontalen Ebene quer zu der Seitenwand und parallel zu einem Boden des Schienenfahrzeugs.

Gemäß einer Weiterbildung der Vorrichtung weist eine jeweilige Sicke eine Längsachse auf, bezüglich der an gegenüberliegenden Enden der jeweiligen Sicke Ausnehmungen angrenzend ausgebildet sind. Die Sicke oder die Sicken sind bevorzugt quer zu der Längsachse des Biegebalkens an den beiden Seitenwänden ausgebildet. Insbesondere sind die Sicken symmetrisch an beiden Seitenwänden ausgebildet, sodass je nach Kraftrichtung eine Seitenwand eine Zugseite und die andere gegenüberliegende Seitenwand eine Druckseite in einem Kollisionsfall ausbildet. Die Sicken auf der Zugseite werden jeweils gestreckt, während die Sicken auf der Druckseite gestaucht werden.

In Ausführung eines vierkantigen Biegebalkens ist zum Beispiel zwischen einer oberen und einer unteren Seitenkante und der Sicke jeweils eine Ausnehmung ausgebildet, welche eine gewisse Flexibilität des Biegebalkens bereitstellt. Die Ausnehmungen realisieren gezielt eingebrachte Freischnitte, die zu einer Bewegungsfreiheit der Sicken beitragen.

Beispielsweise können rotatorische Bewegungen der Tischplatte um ihre Längsachse mittels des Biegebalkens in gewissem Maße kompensiert oder aufgenommen werden.

Gemäß einer weiteren Weiterbildung der Vorrichtung weist der Biegebalken alternativ oder zusätzlich zu den Sicken eine Mehrzahl von Ausschnitten auf, die an der Oberseite und/oder an der Unterseite des Biegebalkens ausgebildet ist. Vorzugsweise sind an der Ober- und Unterseite des Biegebalkens mehrere Ausschnitte vorgegeben eingebracht und an den Seitenwänden des Biegebalkens mehrere Sicken vorgesehen.

Gemäß einer Ausführungsform sind die Ausschnitte und/oder Sicken bezogen auf eine Längsachse des Biegebalkens äquidistant ausgebildet und zum Beispiel gleichmäßig über eine Länge des Biegebalkens verteilt. Gemäß einer alternativen Ausführungsform sind die Ausschnitte und/oder Sicken bezogen die Längsachse des Biegebalkens nicht gleichmäßig verteilt und/oder nicht äquidistant angeordnet oder ausgebildet. Zum Beispiel sind eine Mehrzahl von Ausschnitten und Sicken einem gangseitigen oder wandseitigen Ende des Biegebalkens zugeordnet, während an dem entsprechend anderem Ende eine geringere Anzahl solcher Schwächungselemente vorgesehen ist. Auf diese Weise kann eine gezielte Schwächung des Biegebalkens eingerichtet und eine vorgegebene Verformung des Biegebalkens ermöglicht werden. Die Verformung ist insbesondere derart vorgegeben, dass ein entsprechender Biegemomentverlauf eingerichtet ist.

Gemäß einer weiteren Weiterbildung sind die Ausschnitte bezüglich einer jeweiligen Längsachse v-förmig von dem Biegebalken begrenzt ist und verjüngen sich hin in Richtung einer Mitte der Oberseite oder Unterseite des Biegebalkens.

Die Ausschnitte werden zum Beispiel an vorgegebenen Positionen aus dem Biegebalken mittels eines Lasers ausgeschnitten.

Gemäß einer Weiterbildung der Vorrichtung sind bezogen auf eine Längsachse der Ausschnitte jeweils zwei Ausschnitte einander gegenüberliegend auf der Oberseite und/oder der Unterseite ausgebildet, sodass ein Verbindungsabschnitt des Biegebalkens zwischen zwei gegenüberliegenden Ausschnitten ausgebildet ist. Gemäß einer solchen Ausgestaltung sind die Längsachsen der einander gegenüberliegenden Ausschnitte im Wesentlichen bis auf Anfertigungstoleranzen identisch. Alternativ sind die Ausschnitte zum Beispiel gegeneinander versetzt.

Eine Form, Position und Anzahl der Ausschnitte und/oder Sicken sind insbesondere auf das Einrichten einer Biege- oder Federsteifigkeit des Biegebalkens abgestimmt. Dies erfolgt insbesondere in Abstimmung auf ein zu erwartendes Biegemoment, welches bei einer Kollision aufgrund eines auftreffenden Körpers auf den Tisch wirken. Dabei sind ferner voraussichtliche Massen, Aufprallpositionen und Fahrzeuggeschwindigkeiten des Schienenfahrzeugs mit einzubeziehen.

Der Biegebalken ist gemäß einer besonders bevorzugten Weiterbildung der Vorrichtung als Rohrprofil ausgebildet. Ein hohl ausgebildeter Biegebalken wirkt sich zum Beispiel nutzbringend auf das Einrichten einer gewünschten Feder- oder Biegesteifigkeit aus. Zudem ist ein hohler Biegebalken leichter und wirkt sich vorteilhaft hinsichtlich einer benötigten Haltekraft in Bezug auf eine Seitenwandanbindung der Vorrichtung aus.

Gemäß einer weiteren Weiterbildung der Vorrichtung sind die Kopplungspositionen zwischen der Tischplatte und dem Biegebalken bezogen auf eine Längsachse der Tischplatte an gegenüberliegenden Enden der Tischplatte eingerichtet. Die Tischplatte ist an der ersten, gangseitigen Kopplungsposition ortsfest mit dem Biegebalken verbunden. Der Biegebalken ist zum Beispiel an der ersten Kopplungsposition mit der Tischplatte verschraubt. Gegebenenfalls sind die Tischplatte und der Biegebalken um diese erste Kopplungsposition ortsfest aber relativ zueinander drehbar ausgebildet.

An der zweiten, wandseitigen Kopplungsposition sind die Tischplatte und der Biegebalken in gewissem Maße beweglich miteinander gekoppelt. Zum Beispiel sind die Tischplatte und der Biegebalken mittels eines Bolzens an der zweiten Kopplungsposition miteinander gekoppelt, der in einer Führung, wie einem Langloch, ein gewisses translatorisches Bewegungsspiel ermöglicht. Insbesondere ist ein Bewegungsspiel des Biegebalkens relativ zu der Tischplatte in Querrichtung quer zu der Seitenwand des Schienenfahrzeugs oder in Längsrichtung der Tischplatte nutzbringend, um einen Längenänderung aufgrund einer Dehnung oder Stauchung des Biegebalkens zu ermöglichen. Der Biegebalken ist somit eine einseitig eingespannte, flexible Tragstruktur, die eine Steifigkeit für die Tischplatte bereitstellt und aufgrund der gezielt eingebrachten Schwächungsstruktur eine vorgegebene Verformung und Bewegung der Tischplatte ermöglicht.

Gemäß einer weiteren bevorzugten Weiterbildung der Vorrichtung ist die Tischplatte an der zweiten, wandseitigen Kopplungsposition entlang einer vorgegebenen Führungsbahn verschwenkbar mit dem Biegebalken gekoppelt. Die Führungsbahn ist zum Beispiel durch ein Führungselement bereitgestellt, welches mit einem Energieverzehrelement zusammenwirkt. Gemäß einer Ausführungsform umfasst die Vorrichtung ein Energieverzehrelement, das an der Unterseite der Tischplatte angeordnet ist, und ein Führungselement, das zwischen der Unterseite der Tischplatte und der Oberseite des Biegebalkens angeordnet ist. Das Führungselement umfasst ein Elastomerelement, welches mit dem Energieverzehrelement zusammenwirkt, um bezogen auf einen an der Seitenwand angeordneten Zustand der Vorrichtung bei einem Auftreten einer in Fahrtrichtung des Schienenfahrzeugs auf die Tischplatte wirkenden Kraft mittels Reibung Energie zu verzehren.

Das Energieverzehrelement ist zum Beispiel als ein Bolzen realisiert oder umfasst einen solchen, der eine Oberseite des Elastomerelements kontaktiert und reibend an das Elastomerelement Energie abgibt bzw. Bewegungsenergie der Tischplatte aufgrund von Reibung in Wärmeenergie umwandelt. Der Bolzen veranlasst somit einen Verzehr von Bewegungsenergie der Tischplatte, die insbesondere durch eine Kollision des Schienenfahrzeugs und das Auftreffen eines Fahrgastes auf den Tisch begründet sein kann. Die eingeleitete Bewegung der Tischplatte wird zumindest teilweise in eine Verformung des Biegebalkens überführt und/oder zumindest teilweise in Wärmeenergie aufgrund von Reibung umgewandelt. Das Energieverzehrelement kann daher auch als Energieumwandlungselement bezeichnet werden.

Der zuvor beschriebene Kopplungsbolzen, der die Tischplatte und den Biegebalken an der zweiten Kopplungsposition miteinander koppelt, realisiert bevorzugt auch das Energieverzehrelement, welches in einem Kollisionsfall durch das Elastomerelement taucht bzw. sich an dem Elastomerelement entlang bewegt. Vor einem Kollisionsfall ist der Bolzen zum Beispiel mit einem Abscher- oder Abrissquerschnitt ausgebildet und ermöglicht ein gewisses Bewegungsspiel als Führung in einer Tischkonsole an der Tischplatte. Der Abscherquerschnitt ist beispielsweise als Einkerbung des Bolzens ausgebildet und realisiert eine Sollbruchstelle, die bei einem Kollisionsfall und einem Überschreiten einer auftretenden Aufprallkraft an der Tischplatte bricht und der Bolzen abschert. Der verbleibende abgescherte Bolzen an der Unterseite der Tischplatte bewegt sich dann entlang eines vorgegebenen Verfahrwegs durch das Elastomerelement oder an diesem entlang. Das Energieverzehrelement ist somit bevorzugt als koppelnder Abscherbolzen ausgebildet, der bei einer vorgegebenen Maximalkraft in einem Kollisionsfall abschert und einen vorgegebenen Verfahrweg des Elastomerelements folgt. In einem betriebsgemäßen Normalzustand fixiert der Bolzen die Tischplatte, sodass keine Verdrehung oder eine geringfügige, vorgegeben tolerierbare Verdrehung der Tischplatte möglich ist.

Das Elastomerelement des Führungselements umfasst zum Beispiel eine Führungsnut, in die sich der Bolzen erstreckt, sodass er eine Wandung der Führungsnut zumindest teilweise kontaktiert. Die Führungsnut weist zum Beispiel die Form eines Kreissegments auf und ist bezogen auf einen Querschnitt v-förmig oder kreisförmig in das Elastomerelement eingebracht. Darüber hinaus sind auch andere Querschnittsgeometrien einer solchen Führungsnut möglich, die insbesondere auf eine Geometrie des Energieverzehrelements abgestimmt sind. Das Elastomerelement ist zum Beispiel aus Gummi oder einem anderen Kunststoff gefertigt oder weist ein solches Material auf.

Gemäß einer Weiterbildung der Vorrichtung ist der Bolzen zylinderförmig, kegelstumpfförmig, dornförmig oder pilzförmig ausgebildet. Als Dorn reibt der Bolzen beispielsweise an einer Oberfläche des Elastomerelements entlang. Als zylinderförmiger Bolzen ist eine Führungsnut in dem Elastomerelement beispielsweise entsprechend rechteckig von dem Elastomermaterial begrenzt. Ein Durchmesser der Führungsnut ist gleich einem oder kleiner als ein Durchmesser des Bolzens ausgebildet, um eine Materialverdrängung und Energieumwandlung aufgrund von Reibung zu ermöglichen.

Gemäß einem weiteren Aspekt der Erfindung umfasst ein Schienenfahrzeug einen Wagenkasten mit einer Seitenwand und eine Ausgestaltung einer der zuvor beschriebenen Vorrichtung, die mittels einer Seitenwandanbindung mit der Seitenwand des Wagenkastens gekoppelt ist. Die Vorrichtung dient insbesondere zum Anbinden eines Tisches für eine quer zur Fahrtrichtung angeordnete Sitzgruppe. Dadurch, dass das Schienenfahrzeug, eine Ausgestaltung der zuvor beschriebenen Vorrichtung umfasst, sind beschriebene Eigenschaften und Merkmale der Vorrichtung auch für das Schienenfahrzeug offenbart und umgekehrt.

In mehreren Normenwelten des Schienenverkehrs, insbesondere im englischen und amerikanischen Normungsbereich, gibt es Vorschriften, die die zulässigen gesundheitsschädlichen Auswirkungen des Aufpralls von Fahrgästen auf Tische im Falle einer Zugkollision oder -Entgleisung begrenzen sollen. Je nach Normenwelt haben diese Vorschriften zulassungsrelevanten oder empfehlenden Charakter. Höhe und Messung der zulässigen Gesundheitsschäden sind in den jeweiligen Normenwerken (z.B. GM/RT, APTA, TecRec) unterschiedlich definiert. Gemein haben diese Vorschriften, dass es das primäre Ziel ist, die eingeleitete Aufprallenergie in den menschlichen Körper zu begrenzen bzw. über einen gegenüber dem bloßen Aufprall verlängerten Zeitraum zu verteilen.

Es ist eine Erkenntnis im Zusammenhang mit der vorliegenden Erfindung, dass in oder an Schienenfahrzeugtischen verbaute konventionelle Systeme über eine Kombination aus translatorischer und rotatorischer Bewegung der Tischplatte ein Ableiten von Aufprallenergie ermöglicht wird. Die Anteile von Translation und Rotation variieren dabei je nach Aufprallpunkt der Person und je nach eingesetztem System. Da eine genaue Bewegungslinie auch von der Masse der aufprallenden Person abhängig ist, ist diese im Vorfeld nicht klar definiert. Zudem erfolgt ein Energieverzehr solcher Systeme üblicherweise durch Verformung oder Zerstörung von Bauteilen, z.B. Knickblechen oder speziellen Crashelementen.

Mittels der beschriebenen Vorrichtung ist ein Sicherheitssystem realisierbar, bei dem eine separate Tragstruktur der Tischplatte als Rohrprofil ausgebildet ist, welche mit der eigentlichen Befestigungskonsole verbunden ist. Durch gezielt angeordnete Ausschnitte in einer oder mehreren waagerechten bzw. horizontalen Ebenen und eingeprägte Sicken in senkrechten bzw. vertikalen Ebenen des Rohrprofils, ist eine relativ "weiche" Flexibilität in Fahrzeuglängsrichtung und eine relativ "harte" Flexibilität in Vertikalrichtung eingerichtet.

Hierdurch wird die Bewegung des Tisches bei einem Aufprall eines Passagiers an einer Position als klar definierte Rotation ausgeführt. Beim Aufprall zweier Personen ergibt sich aus der Summierung zweier Rotationen eine ebenfalls klar definierte Translation der Tischplatte in Fahrzeuglängsrichtung. Der Translationsweg ist dabei unter anderem von der Position des Tisches abhängig.

Der Energieverzehr erfolgt insbesondere durch plastische Umformung in der horizontalen Ebene entlang der ausgebildeten "weichen" Knickstellen, also zum Beispiel in dem Bereich zwischen einander gegenüberliegenden v-förmigen Ausschnitten, sowie durch Dehnung und Stauchung der eingeprägten Sicken an dem Biegebalken.

Die Sicken wirken hierbei wie eine Feder, die dem Biegebalken eine erforderliche Elastizität in Richtung der Biegelinie geben und zudem eine benötigte Biegesteifigkeit in vertikaler Richtung bereitstellen. Die Biegelinie des Rohrprofils bzw. des Biegebalkens entspricht dabei einem Polygonzug, der durch die Anordnung und Anzahl der Ausschnitte und Sicken vorgegeben wird. Durch die unterschiedlichen Hebelverhältnisse und wirkenden Kräfte wird der Biegebalken sich beginnend von der Wandseite zur Gangseite des Schienenfahrzeugs entsprechend dem Polygonzug verformen.

Die Tischplatte ist an der Gangseite des Schienenfahrzeugs zum Beispiel starr mit dem Biegebalken verschraubt. Zur Wandseite des Schienenfahrzeugs ist die Tischplatte zum Beispiel über einen Führungsdorn oder Führungsbolzen, der das Energieverzehrelement ausbildet, und dem Elastomerelement mit dem Biegebalken verbunden. Das Elastomerelement stellt zum Beispiel einen Längenausgleich bereit, welcher sich durch die Verkürzung einer Sehnenlänge beim Verformen des Biegebalkens ergibt. Beispielsweise ist an dieser zweiten Kopplungsposition zusätzlich eine Gleitplatte angeordnet, auf der die Tischplatte aufliegt. Eine solche Platte kann eine nutzbringende Kippstabilität der Tischplatte gewährleisten oder zumindest zu einer solchen beitragen.

Die Vorrichtung ist insbesondere als reine Wandanbindung, eine sogenannte Cantilever-Ausgestaltung, realisiert. Gemäß einer Ausführungsform weist die Vorrichtung aber zum Beispiel einen Tischfuß auf, der zur Abstützung betrieblicher und statischer Vertikalkräfte vorgesehen ist.

Im Vergleich zu bekannten Systemen sind die Bewegungen der Tischplatte gemäß der beschriebenen Vorrichtung bei einem Aufprall definiert vorgegeben. Somit ist eine präzise Simulation und Berechnung des Energieabbaus möglich und es kann der dabei zurückgelegte Weg der Tischplatte zur Einhaltung des Überlebensraumes der gegenüber an dem Tisch sitzenden Passagiere ermittelt werden.

Die Definition der Tischbewegung an beiden Aufprallpunkten als Rotation erlaubt die Nutzung von Hebelverhältnissen bei der Anordnung des Biegebalkens als Energieverzehrelement. Hierdurch ist der Weg des Energieverzehrs oder der Energieumwandlung im Gegensatz zu bekannten Systemen nicht begrenzend für den zurückgelegten Weg des aufprallenden Passagiers. Dadurch kann ein hinreichend weicher oder sanfter Energieabbau realisiert werden, welcher einer flachen Federkennlinie des Biegebalkens entspricht. Dies ist ferner möglich, ohne eine Breite des Tisches gemäß einer Abmessung in Fahrzeuglängsrichtung des Schienenfahrzeugs signifikant vergrößern zu müssen. Eine resultierende Mindestbreite eines Tisches mit der Vorrichtung beträgt zum Beispiel deutlich weniger als 400 mm und ist nur durch die Breite des Biegebalkens limitiert.

Die vorzugsweise zusätzlich ausgebildete Möglichkeit der Tischplattendrehung an der wandseitigen Kopplungsposition realisiert einen weiteren Energieverzehrmechanismus. Der Unterbau der Tischplatte erhält somit einen definierten gangseitigen Drehpunkt, der den Rotationspunkt bei einem Aufprall eines wandseitigen Passagiers eines Doppelsitztisches definiert. Hierdurch wird die Bewegung des Tisches bei einem Aufprall des wandseitigen Passagiers immer als vorgegeben gerichtete Rotation ausgeführt. Beim Aufprall zweier Personen ergibt sich aus der Summierung der beiden Rotationen zum Beispiel eine definierte Translation. Der Energieverzehr erfolgt dabei in einem zwischen Tischplatte und der Befestigungskonsole montierten Element, welches durch das Führungselement und das Energieverzehrelement, wie zum Beispiel ein Bolzen, gebildet ist. Die Methode des Energieverzehrs basiert dabei auf Reibung und dem elastischen Aufweiten oder Verformen des Elastomerelementes, welches beim Durchfahren des Energieverzehrelements verursacht wird.

Die beschriebenen Methoden des Energieverzehrs erlauben eine einfache Modifikation der Federsteifigkeit des Biegebalkens, zum Beispiel durch Anpassung der Ausschnitte und Sicken hinsichtlich ihrer Form, Position und Anzahl in oder an dem Biegebalken. Eine weitere Anpassung der Elastizität und Verformbarkeit des Biegebalkens erfolgt zum Beispiel durch eine Materialwahl des Elastomerelements mit vorgegebener Shore-Härte. Zum Beispiel betrifft dies auch eine Materialwahl des Energieverzehrelements mit einer jeweils vorgegebenen Shore-Härte. Auch wirken sich eine Geometrie oder Öffnungsweite der gegebenenfalls vorgesehenen Führungsnut des Elastomerelements sowie eine vorgegebene Geometrie eines Bolzens als Energieverzehrelement auf den einrichtbaren Energieverzehr aus.

Eine Anpassung eines bestehenden Systems kann ohne Veränderung des benötigten Bauraums durch unterschiedliche Hebelverhältnisse, wie z.B. durch verschiedene Sitzbreiten, erfolgen. Zudem ist das mittels der beschriebenen Vorrichtung erzielbare Energieverzehrsystem toleranzunempfindlich, zum Beispiel bezogen auf Toleranzen einer Bolzengeometrie zu der Geometrie eines Elastomerelements. Die Vorrichtung, insbesondere der Biegebalken, ist mit relativ geringer Aufbaudicke in vertikaler Richtung ausbildbar. Hierdurch wird ein verfügbarer Knieraum für sitzende Passagiere nicht, wie bei einigen konventionellen Systemen, unerwünscht eingeschränkt.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Es zeigen:
- Figur 1: eine schematische Darstellung eines Schienenfahrzeugs mit einer Vorrichtung zum Anbinden eines Tisches an eine Seitenwand des Schienenfahrzeugs,
- Figuren 2-5: ein Ausführungsbeispiel der Vorrichtung zum Anbinden eines Tisches an eine Seitenwand des Schienenfahrzeugs,
- Figuren 6-10: ein Ausführungsbeispiel eines Biegebalkens der Vorrichtung zum Anbinden eines Tisches an eine Seitenwand des Schienenfahrzeugs,
- Figuren 11-22: weitere Ausführungsbeispiele der Vorrichtung zum Anbinden eines Tisches an eine Seitenwand des Schienenfahrzeugs.

Elemente gleicher Konstruktion und Funktion sind figurenübergreifend mit denselben Bezugszeichen gekennzeichnet. Aus Gründen der Übersichtlichkeit sind gegebenenfalls nicht alle Elemente in sämtlichen Figuren mit zugehörigen Bezugszeichen gekennzeichnet.

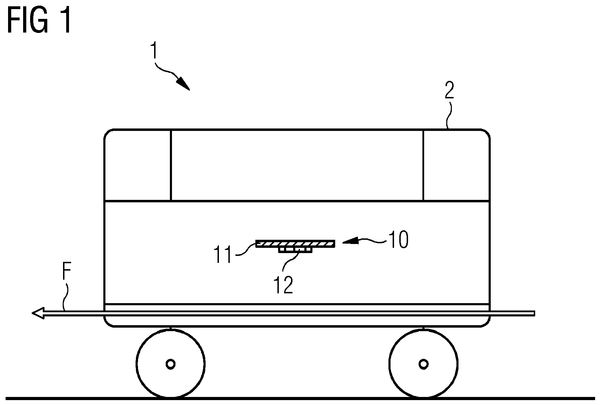

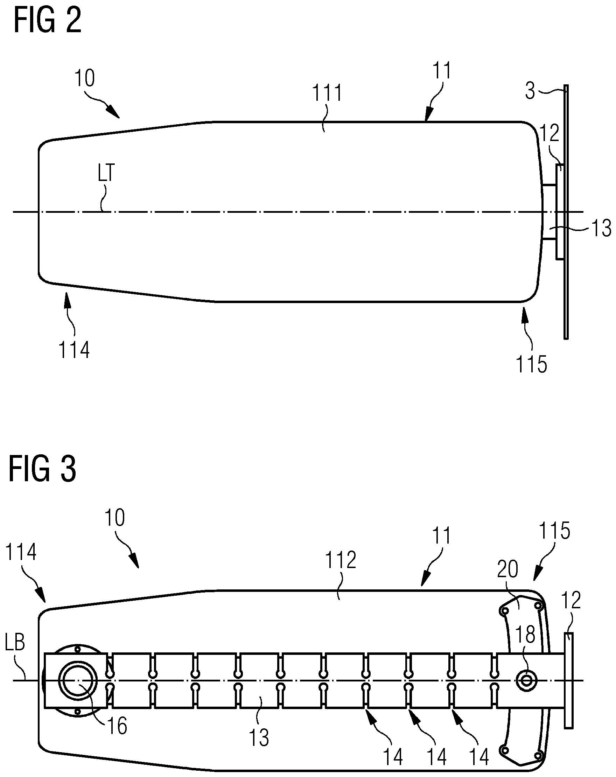

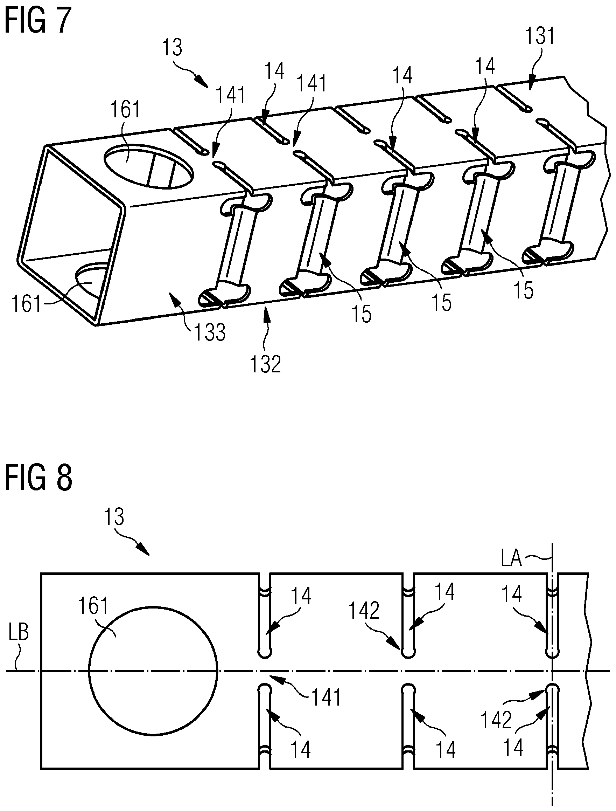

Figur 1 zeigt in einer schematischen Seitenansicht ein Schienenfahrzeug 1 mit einem Wagenkasten 2 und einer Vorrichtung 10 zum Anbinden eines Tisches an eine Seitenwand 3 des Wagenkastens 2. Wie nachfolgend anhand der Figuren 2-22 erläutert wird, stellt die Vorrichtung 10 eine sichere und zuverlässige Stützstruktur bereit, welche insbesondere eine Verletzungsgefahr für Fahrgäste in einem Betrieb des Schienenfahrzeugs 1 gering hält.

Die Vorrichtung 10 weist eine Tischplatte 11 mit einer Oberseite 111 und einer Unterseite 112 und einen Biegebalken 13 auf, der an der Unterseite 112 der Tischplatte 11 angeordnet ist. Begriffe, wie "oben", "unten", "Oberseite", "Unterseite", "Fahrtrichtung", "Querrichtung", beziehen sich auf eine Ausrichtung der Vorrichtung 10 hinsichtlich eines betriebsgemäß angeordneten und einsatzbereiten Zustands an der Seitenwand 3 des Schienenfahrzeugs 1. Somit erstreckt sich die Tischplatte 11 im Wesentlichen in einer horizontalen Ebene quer zu der Seitenwand 3 und parallel zu einem Boden des Schienenfahrzeugs 1.

Der Biegebalken 13 ist an einer ersten und einer zweiten Kopplungsposition 16, 18 mit der Tischplatte 11 gekoppelt und koppelt die Tischplatte 11 mittels einer Seitenwandanbindung 12 mit der Seitenwand 3 des Schienenfahrzeugs 1. Der Biegebalken 13 weist eine Schwächungsstruktur 14, 15 auf, die eine vorgegebene Elastizität des Biegebalkens 13 ausbildet, sodass bei einem Auftreten einer entlang der Fahrtrichtung F des Schienenfahrzeugs 1 auf die Tischplatte 11 wirkenden Kraft F1, F2 eine durch die Schwächungsstruktur 14, 15 vorgegebene plastische Umformung des Biegebalkens 13 und Rotation der Tischplatte 11 relativ zu der Seitenwand 3 eingerichtet ist.

Bezogen auf eine Längsachse LT ist die erste Kopplungsposition 16 einem ersten, gangseitigen Ende 114 der Tischplatte 11 zugeordnet. Die erste Kopplungsposition 16 bildet einen Drehpunkt der Tischplatte 11 relativ zu dem Biegebalken 13 aus. Die zweiten Kopplungsposition 18 ist einem zweiten, wandseitigen Ende 115 der Tischplatte 11 zugeordnet. Die Längsachse LT ist in einem ordnungsgemäßen Zustand ohne Krafteinwirkung auf die Tischplatte 11 im Wesentlichen parallel zu einer Längsachse LB des Biegebalkens 13 und entsprechen einer Querrichtung des Schienenfahrzeugs 1.

Die Figur 2 zeigt den kollisionsfähigen Tisch mit der Vorrichtung 10 in einem Einbauzustand in einer Aufsicht. Figur 3 zeigt eine entsprechende Unteransicht. Die Tischplatte 11 ist gangseitig zum Beispiel fest mittels eines Lagers oder eines Drehgelenks mit dem Biegebalken 13 verschraubt. Zur Wandseite ist die Tischplatte 11 mittels eines Führungsbolzens 17 und einem Elastomerelement 191 mit dem Biegebalken 13 verbunden. Der Führungsbolzen 17 realisiert ein Energieverzehrelement, welches mit einem Führungselement 19 zusammenwirkt und Bewegungsenergie der Tischplatte 11 verzehrt bzw. aufgrund von Reibung in Wärmeenergie umwandelt.

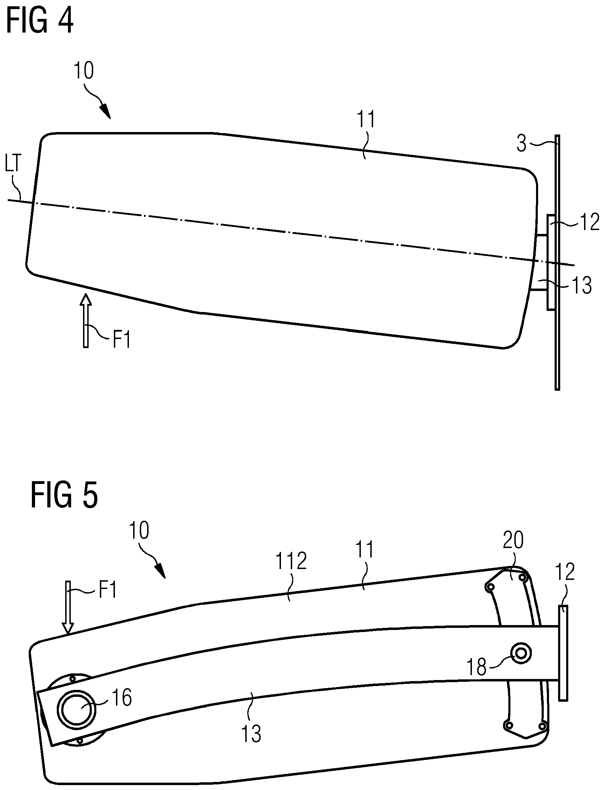

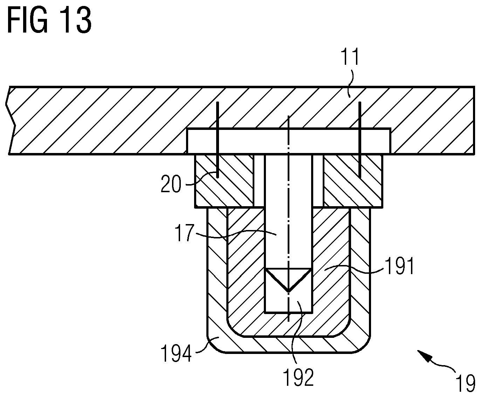

Das Elastomerelement 191 stellt einen Längenausgleich bereit, welcher sich durch die Verkürzung einer Sehnenlänge beim Verformen des Biegebalkens 13 ergibt (s. Figuren 4 und 5). Das Führungselement 19 umfasst unter anderem eine Halterung 194 für das Elastomerelement 191. Zum Beispiel ist ferner eine Gleitplatte 20 vorgesehen, auf der die Tischplatte 11 aufliegt und die eine nutzbringende Kippstabilität bereitstellt (s. Figur 13). Der Führungsbolzen 17 kann eine Erhebung einer Platte ausbilden, welche wie in Figur 5 illustriert, einen stabilen und sicheren Halt an der Unterseite 112 der Tischplatte 11 ermöglicht.

Die Figuren 4 und 5 illustrieren einen Kollisionszustand der Vorrichtung 10, in welchem ein Fahrgast gegen eine Tischkante der Tischplatte 11 beschleunigt wird. Figur 4 zeigt eine Aufsicht und Figur 5 eine Unteransicht.

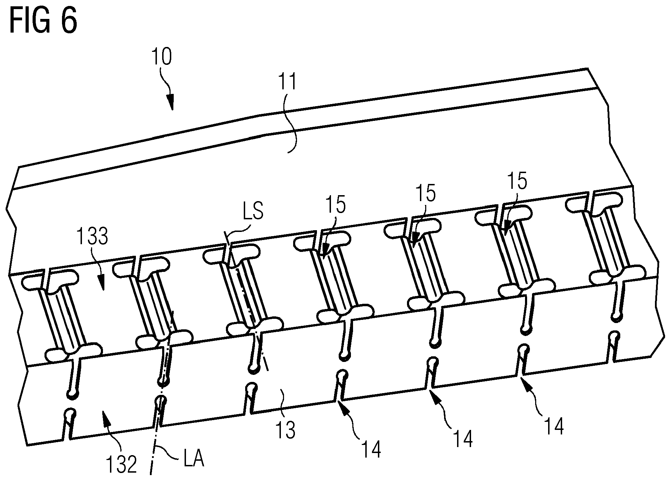

Der Biegebalken 13 ist als vierkantiges Rohrprofil ausgestaltet und weist eine Oberseite 131, die der Tischplatte 11 zugewandt ist, und eine Unterseite 132 auf, die der Tischplatte 11 abgewandt ist (s. Figuren 6 bis 10). Der Biegebalken 13 weist ferner zwei Seitenwände 133 auf, die jeweils die Oberseite 131 mit der Unterseite 132 verbinden. Die in dem Biegebalken 13 gezielt eingebrachte Schwächungsstruktur umfasst eine Mehrzahl von Ausschnitten 14 auf der Ober- und Unterseite 131 und 132 sowie eine Mehrzahl von Sicken 15, die an den Seitenwänden 133 des Biegebalkens 13 ausgebildet ist. Die Ausschnitte 14 und Sicken 15 sind aufeinander abgestimmt positioniert und, zum Beispiel wie in den Figuren 3 und 6 illustriert, verteilt über eine Länge des Biegebalkens 13 äquidistant ausgebildet. In Figur 5 sind die Ausschnitte 14 nicht eingezeichnet, um lediglich das Prinzip des Biegebalkens 13 darzustellen.

Anhand der perspektivischen Ansicht gemäß Figur 6 ist zu erkennen, dass die Sicken 15 bezogen auf einen Querschnitt quer zu einer jeweiligen Längsachse LS kreisförmig ausgebildet sind. An gegenüberliegenden Enden einer jeweiligen Sicke 15, die an die Oberseite 131 oder die Unterseite 132 des Biegebalkens 13 angrenzen, sind Ausnehmungen 151 ausgebildet, die in Form von Langlöchern Freischnitte ausbilden und eine gewisse Flexibilität des Biegebalkens 13 beim Verformen bereitstellen. Zum Beispiel ist ein lokales Einknicken des Biegebalkens 13 entlang einer jeweiligen Sicke 15 möglich und zudem kann in gewissem Maße eine rotatorische Bewegung der Tischplatte 11 um seine Längsachse LT bzw. um die Längsachse LB des Biegebalkens 13 aufgenommen werden, wobei die Tischplatte 11 um die Kopplungsposition 16 drehbar ist. Die Sicken 15 und die Ausnehmungen 151 ermöglichen das gezielte Verformen des Biegebalkens 13 auf der Zugseite und der Druckseite.

Die Ausschnitte 14 sind bezogen auf eine jeweilige Längsachse LA v-förmig ausgestaltet bzw. von dem Biegebalken 13 begrenzt. Auf der Oberseite 131 und der Unterseite 132 des Biegebalkens 13 sind jeweils zwei Ausschnitte 14 einander gegenüberliegend ausgebildet, sodass zwischen ihnen ein Verbindungsabschnitt 141 des Biegebalkens 13 verbleibt. Die Ausschnitte 14 verjüngen sich hin in Richtung einer Mitte der Ober- oder Unterseite 131, 132 des Biegebalkens 13. Zudem weist ein jeweiliger Ausschnitt 14 an seinem dem Verbindungsabschnitt 141 zugewandten Ende eine kreisförmige Ausnehmung 142 auf, welche eine Entlastungsbohrung darstellt und Spannungsspitzen in dem Biegebalkenmaterial entgegenwirkt. Darüber hinaus ermöglichen die Ausnehmungen 142 eine kontrollierte Materialbewegung des Biegebalkenmaterials bei einem Verformen des Biegebalkens 13. Außerdem weist der Biegebalken 13 an seinem gangseitigen Ende Ausnehmungen 161 auf, die ein Verschrauben oder Koppeln des Biegebalkens 13 an der Tischplatte 11 und das Ausbilden des ersten Drehpunkts bzw. der ersten Kopplungsposition 16 ermöglichen. An der ersten Kopplungsposition 16 ist zum Beispiel mittels eines Gleitlagers ein Drehpunkt der Tischplatte 11 relativ zu dem Biegebalken 13 realisiert.

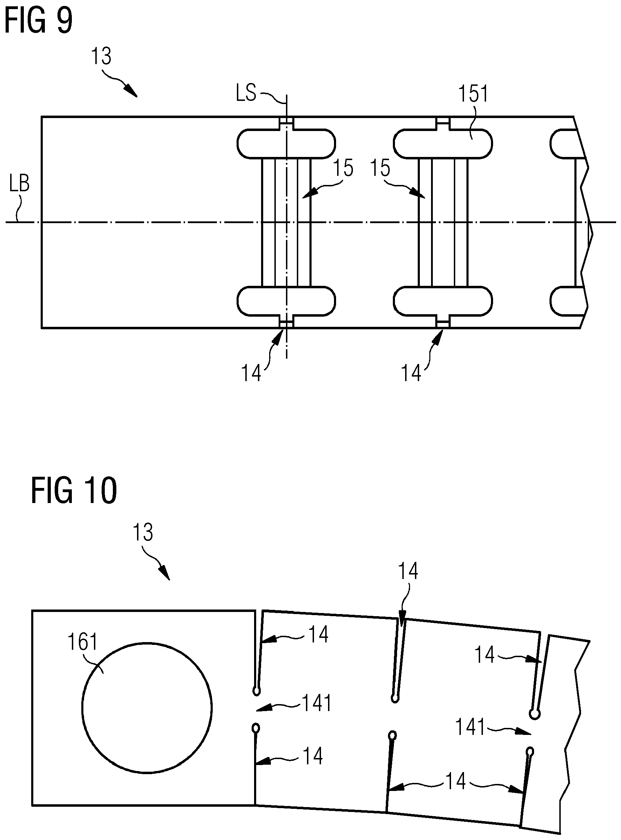

Die Figur 9 zeigt einen Abschnitt des Biegebalkens 13 in einer Seitenansicht. Die Figur 10 zeigt einen Abschnitt des Biegebalkens 13 in einer Aufsicht oder Unteransicht im Zustand einer Kollision. Die Ausschnitte 14 sind verformt. Einerseits sind die Ausschnitte 14 gedehnt und bilden einen im Vergleich zum Normalzustand vergrößerten Restspalt. Anderseits sind die Ausschnitte 14 verkleinert oder geschlossen, sodass sich einander gegenüberliegende Begrenzungen des Biegebalkens 13 kontaktieren und Anlageflächen bilden. Der verformte Biegebalken 13 weist somit einen Polygonzug einer Biegelinie auf, der durch die Form, Position und Anzahl an Ausschnitten 14 und Sicken 15 vorgegeben ist.

Die in Figur 10 gedehnte, obere Seite des Biegebalkens 13 entspricht in Bezug auf eine Kräftebilanz einer Zugseite und die gestauchte, untere Seite einer Druckseite. Die Verbindungsabschnitte 141 zwischen zwei Ausschnitten 14 bildet einen jeweiligen plastischen Umformungsbereich des Biegebalkens 13, der eine Faltung ermöglicht. Eine Stärke des Rohrprofils des Biegebalkens 13, eine Tiefe der Sicken 15, eine maximale und minimale Öffnungsweite der sich verjüngenden Ausschnitte 14 beeinflussen die ausbildbare Elastizität des Biegebalkens 13 und bestimmen die Steifigkeit und Verformbarkeit des Biegebalkens 13 sowie die Bewegung und die Widerstandskraft der Tischplatte 11.

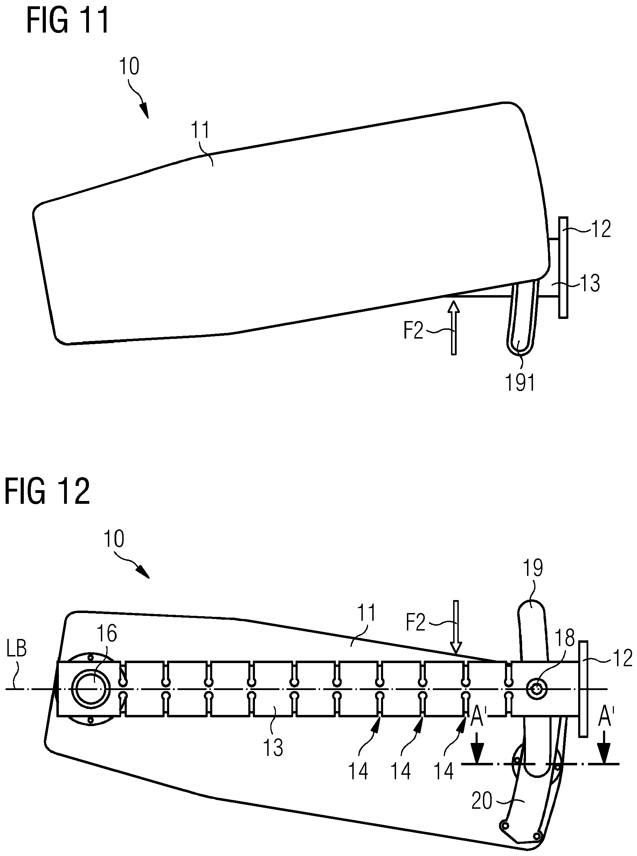

Die Figuren 11 und 12 sowie 14 und 15 zeigen ein weiteres Ausführungsbeispiel der Vorrichtung 10, welche zusätzlich zu dem Biegebalken 13 eine Tischplattendrehung um die erste Kopplungsposition 16 bzw. den dort eingerichteten Drehpunkt ermöglicht. Figur 11 zeigt einen Kollisionszustand, wenn an dem wandseitigen Ende 115 eine Kraft F2 auf die Tischplatte 11 wirkt. Das Führungselement 19 mit dem Elastomerelement 191 wirkt rotatorisch mit der Gleitplatte 20 zusammen. Das Energieverzehrelement 17 weist zum Beispiel einen zylinder- oder dornförmigen Bolzen auf, der das Elastomerelement 191 kontaktiert. Die wirkende Kraft F2 führt dazu, dass die Tischplatte 11 mit dem an der Unterseite 112 angebrachten Energieverzehrelement 17 und der Gleitplatte 20 relativ zu dem Biegebalken 13 und dem Führungselement 19 verschwenkt wird (s. Figur 12). Ein Einwirken einer Kraft F1 auf die Tischplatte 11 an einer gangseitigen Position ist den Figuren 4 und 5 zu entnehmen.

Figur 13 zeigt schematisch einen Querschnitt durch die Vorrichtung 10 entlang der in Figur 12 gestrichelt eingezeichneten Schnittlinie AA'. An der Unterseite 112 der Tischplatte 11 ist das Energieverzehrelement 17 in Form einer Platte mit einem bolzenförmigen Element angeordnet, das sich in eine Führungsnut 192 des Elastomerelements 191 hinein erstreckt. Das Elastomerelement 191 ist in der U-förmigen Halterung 194 eingebracht. Zwischen der Halterung 194 bzw. dem Elastomerelement 191 und der Tischplatte 11 ist die Gleitplatte 20 angeordnet und trägt zur Stabilität der beweglich Tischplatte 11 bei.

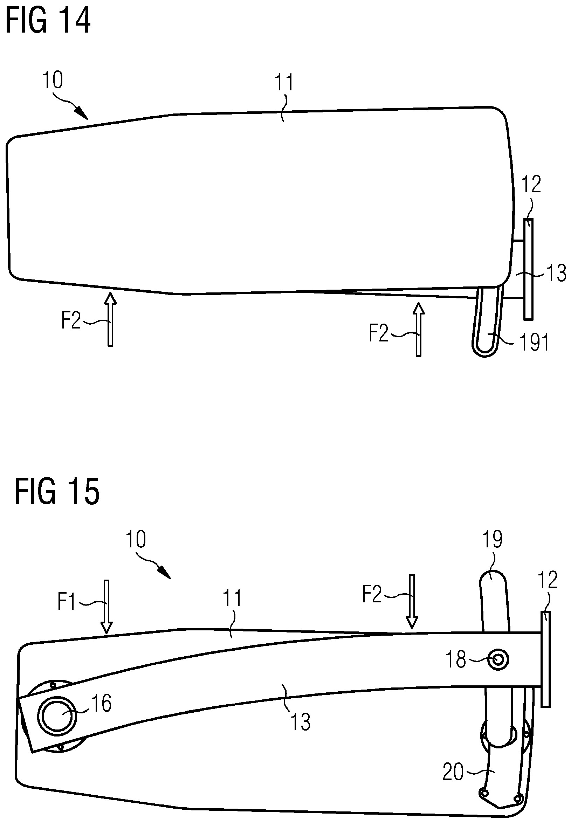

Die Figuren 14 und 15 zeigen die Vorrichtung 10 gemäß den Figuren 11 und 12 in einer Kollisionssituation, in welcher zwei Fahrgäste gegen die Tischplatte 11 beschleunigt werden und eine gangseitige Kraft F1 und eine wandseitige Kraft F2 auf die Tischplatte 11 ausüben. Dies führt einerseits zu einer definierten Rotation der Tischplatte 11 gemäß dem Verbiegen des Biegebalkens 13 und anderseits zu einer definierten Rotation der Tischplatte 11 um die erste Kopplungsposition 16 und entlang der durch das Führungselement 19 vorgegebenen Führung. Eine Überlagerung dieser beiden Rotationen führt dann zum Beispiel zu einer klar definierten Translation der Tischplatte 11 in Wirkrichtung der Kräfte F1 und F2. In einer solchen Situation ist der Biegebalken 13 verformt und die Tischplatte 11 gemäß dem Führungselement 19 und dem Energieverzehrelement 17 gedreht.

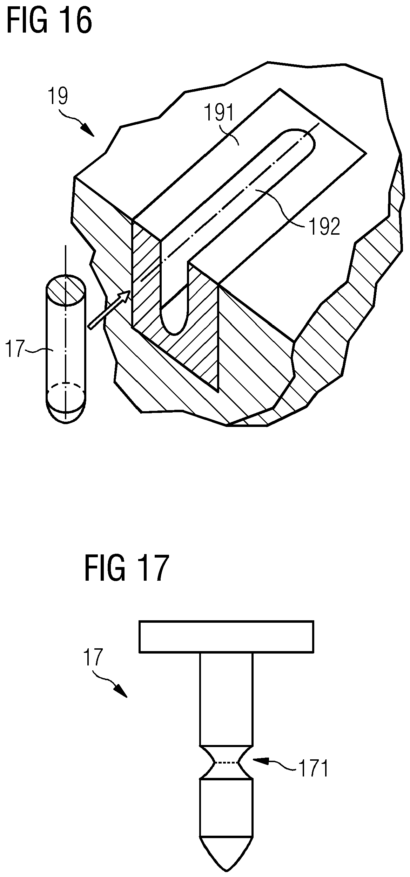

Die Figuren 16 bis 22 zeigen schematisch einen Abschnitt oder Querschnitt des Führungselements 19 und des damit zusammenwirkenden bolzenförmigen Energieverzehrelements 17. Figur 17 zeigt das Energieverzehrelement bzw. den Führungsbolzen 17 in einer Einbausituation, in welcher er einen Abreißquerschnitt 171 aufweist, der eine Sollbruchstelle ausbildet. Beim Überschreiten einer vorgegebenen Maximalkraft, die an der Tischplatte 11 wirkt, schert der obere Abschnitt von dem Führungsbolzen 17 an dem Abreißquerschnitt 171 von dem unteren Abschnitt ab und kann sich entlang der vorgegebenen Führungsnut 192 durch das Elastomerelement 191 bewegen.

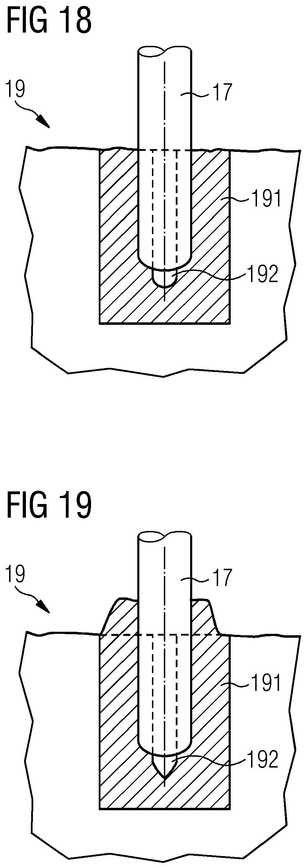

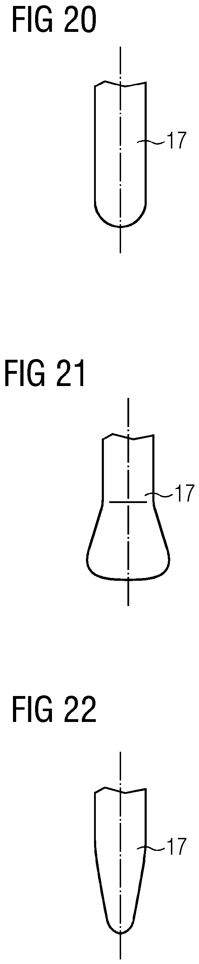

Figur 18 zeigt zum Beispiel eine Normalstellung und Figur 19 eine Kollisionssituation, in welcher das Energieverzehrelement 17 durch die Führungsnut 192 reibend geführt wird und aufgrund von Materialverdrängung eine Bremswirkung der Tischplatte 11 bewirkt. Die Figuren 20 bis 22 zeigen mögliche Ausführungsformen des bolzenförmigen Energieverzehrelements 17.

Mittels der beschriebenen Vorrichtung 10 ist eine sichere und zuverlässige Stützstruktur zur Seitenwandanbindung eines Tisches für eine quer zur Fahrtrichtung F angeordnete Sitzgruppe des Schienenfahrzeugs 1 realisierbar, die mit hoher Stabilität die Verletzungsgefahr der Fahrgäste im Betrieb, insbesondere bei Kollisionen, deutlich vermindert, ohne dass Komforteinbußen hingenommen werden müssen. Die Vorrichtung 10 ist gemäß ihrem Aufbau so ausgebildet, dass Kräfte F1, F2 bzw. Drehmomente, die an der Tischplatte 11 wirken, durch eine kontrollierte Verformung des Biegebalkens 13 zuverlässig aufgenommen und sicher abgeleitet werden. Eine Widerstandskraft der Tischplatte 11, die bei einer Kollision auf den oder die auftreffenden Fahrgäste wirkt, kann dadurch gering gehalten werden.

Eine Anpassung bestehender Sicherheitssysteme kann mittels der Vorrichtung 10 auf einfache Weise erfolgen, ohne Veränderung des benötigten Bauraums durch unterschiedliche Hebelverhältnisse, wie z.B. durch verschiedene Sitzbreiten, zu verursachen. Zudem ist das mittels der beschriebenen Vorrichtung 10 erzielbare Energieverzehrsystem toleranzunempfindlich, zum Beispiel bezogen auf Toleranzen einer Bolzengeometrie zu der Geometrie des Elastomerelements 191. Die Vorrichtung 10, insbesondere der Biegebalken 13, ist mit relativ geringer Aufbaudicke in vertikaler Richtung ausbildbar. Hierdurch wird ein verfügbarer Knieraum für sitzende Passagiere nicht oder nur gering eingeschränkt. Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beigefügten Ansprüchen zu verlassen.

### Bezugszeichenliste

- 1: Schienenfahrzeug
- 2: Wagenkasten des Schienenfahrzeugs
- 3: Seitenwand des Schienenfahrzeugs
- 10: Vorrichtung
- 11: Tischplatte
- 111: Oberseite der Tischplatte
- 112: Unterseite der Tischplatte
- 114: erstes, gangseitiges Ende der Tischplatte
- 115: zweites, wandseitiges Ende der Tischplatte
- 12: Seitenwandanbindung
- 13: Biegebalken
- 131: Oberseite des Biegebalkens
- 132: Unterseite des Biegebalkens
- 133: Seitenwand des Biegebalkens
- 14: Ausschnitt
- 141: Verbindungsabschnitt zwischen gegenüberliegenden Ausschnitten
- 142: Ausnehmung
- 15: Sicke
- 151: Ausnehmung
- 16: erste, gangseitige Kopplungsposition zwischen dem Biegebalken und der Tischplatte
- 161: Kopplungsausnehmung des Biegebalkens
- 17: Energieverzehrelement / Führungsbolzen
- 171: Abscherquerschnitt / Sollbruchstelle des Energieverzehrelements
- 18: zweite, wandseitige Kopplungsposition zwischen dem Biegebalken und der Tischplatte
- 19: Führungselement
- 191: Elastomerelement des Führungselements
- 192: Führungsnut des Elastomerelements
- 20: Gleitplatte
- LB: Längsachse des Biegebalkens
- LA: Längsachse eines Ausschnitts
- LS: Längsachse einer Sicke
- LT: Längsachse der Tischplatte
- F: Fahrtrichtung des Schienenfahrzeugs
- F1: erste Kraft
- F2: zweite Kraft

## Patentansprüche

1. Vorrichtung (10) zum Anbinden eines Tisches an eine Seitenwand (3) eines Schienenfahrzeugs (1), aufweisend:
- eine Tischplatte (11) mit einer Oberseite (111) und einer Unterseite (112), und
- einen Biegebalken (13),
- der an der Unterseite (112) der Tischplatte (11) angeordnet und an einer ersten, gangseitigen Kopplungsposition (16) und einer zweiten, wandseitigen Kopplungsposition (18) mit der Tischplatte (11) gekoppelt ist und
- der dazu ausgebildet ist, die Tischplatte (11) mittels einer Seitenwandanbindung (12) mit der Seitenwand (3) des Schienenfahrzeugs (1) zu koppeln,
- wobei der Biegebalken (13) eine Schwächungsstruktur (14, 15) aufweist, die eine vorgegebene Elastizität des Biegebalkens (13) ausbildet, sodass bezogen auf einen an der Seitenwand (3) angeordneten Zustand der Vorrichtung (10) bei einem Auftreten einer in Fahrtrichtung (F) des Schienenfahrzeugs (1) auf die Tischplatte (11) wirkenden Kraft (F1, F2) die Schwächungsstruktur (14, 15) eine vorgegebene Umformung des Biegebalkens (13) und Rotation der Tischplatte (11) relativ zu der Seitenwand (3) zulässt,
**dadurch gekennzeichnet, dass**
der Biegebalken (13)
- eine Oberseite (131) aufweist, die der Tischplatte (11) zugewandt ist,
- eine Unterseite (132) aufweist, die der Tischplatte (11) abgewandt ist, und
- zwei Seitenwände (133) aufweist, die jeweils die Oberseite (131) mit der Unterseite (132) verbinden, und bei der
- die Schwächungsstruktur eine Mehrzahl von Sicken (15) umfasst, die an zumindest einer Seitenwand (133) des Biegebalkens (13) ausgebildet ist.

2. Vorrichtung (10) nach Anspruch 1,
**dadurch gekennzeichnet, dass**
- eine Sicke (15) jeweils eine Längsachse (LS) aufweist, und
- bezogen auf die Längsachse (LS) angrenzend zu gegenüberliegenden Enden einer jeweiligen Sicke (15) Ausnehmungen (151) ausgebildet sind.

3. Vorrichtung (10) nach einem der Ansprüche 1 oder 2, **dadurch gekennzeichnet, dass**
der Biegebalken (13)
- eine Oberseite (131) aufweist, die der Tischplatte (11) zugewandt ist,
- eine Unterseite (132) aufweist, die der Tischplatte (11) abgewandt ist, und
- zwei Seitenwände (133) aufweist, die jeweils die Oberseite (131) mit der Unterseite (132) verbinden, und bei der
- die Schwächungsstruktur eine Mehrzahl von Ausschnitten (14) umfasst, die an der Oberseite (131) und/oder an der Unterseite (132) des Biegebalkens (13) ausgebildet ist.

4. Vorrichtung (10) nach Anspruch 3,
**dadurch gekennzeichnet, dass**
- ein Ausschnitt (14) jeweils eine Längsachse (LA) aufweist,
- der jeweilige Ausschnitt (14) bezogen auf die Längsachse (LA) v-förmig durch den Biegebalken (13) begrenzt ist, und
- der jeweilige Ausschnitt (14) sich in Richtung einer Mitte der Oberseite (131) oder Unterseite (132) hin verjüngt.

5. Vorrichtung (10) nach Anspruch 3 oder 4,
**dadurch gekennzeichnet, dass**
- ein Ausschnitt (14) jeweils eine Längsachse (LA) aufweist, und
- bezogen auf die Längsachsen (LA) jeweils zwei Ausschnitte (14) einander gegenüberliegend auf der Oberseite (131) und/oder der Unterseite (132) ausgebildet sind, sodass
- ein Verbindungsabschnitt (141) des Biegebalkens (13) zwischen zwei gegenüberliegenden Ausschnitten (14) ausgebildet ist.

6. Vorrichtung (10) nach einem der Ansprüche 1 bis 5, **dadurch gekennzeichnet, dass**
die Sicken (15) und/oder die Ausschnitte (14) bezogen auf eine Längsachse (LB) des Biegebalkens (13) äquidistant ausgebildet sind.

7. Vorrichtung (10) nach einem der Ansprüche 1 bis 6, **dadurch gekennzeichnet, dass**
der Biegebalken (13) als Rohrprofil ausgebildet ist.

8. Vorrichtung (10) nach einem der Ansprüche 1 bis 7,
**dadurch gekennzeichnet, dass**
- die Kopplungspositionen (16, 18) zwischen der Tischplatte (11) und dem Biegebalken (13) bezogen auf eine Längsachse (LT) der Tischplatte (11) an gegenüberliegenden Enden (114, 115) der Tischplatte (11) eingerichtet sind, und
- die Tischplatte (11) an der ersten, gangseitigen Kopplungsposition (16) ortsfest mit dem Biegebalken (13) verbunden ist.

9. Vorrichtung (10) nach Anspruch 8,
**dadurch gekennzeichnet, dass**
die Tischplatte (11) an der zweiten, wandseitigen Kopplungsposition (18) entlang einer vorgegebenen Führungsbahn (19) verschwenkbar mit dem Biegebalken (13) gekoppelt ist.

10. Vorrichtung (10) nach Anspruch 9,
**dadurch gekennzeichnet, dass**
es umfasst:
- ein Energieverzehrelement (17), das an der Unterseite (112) der Tischplatte (11) angeordnet ist, und
- ein Führungselement (19), das zwischen der Unterseite (112) der Tischplatte (11) und der Oberseite (131) des Biegebalkens (13) angeordnet ist,
- wobei das Führungselement (19) ein Elastomerelement (191) umfasst, welches mit dem Energieverzehrelement (17) zusammenwirkt, um bezogen auf einen an der Seitenwand (3) angeordneten Zustand der Vorrichtung (10) bei einem Auftreten einer in Fahrtrichtung (F) des Schienenfahrzeugs (1) auf die Tischplatte (11) wirkenden Kraft (F1, F2) mittels Reibung Energie zu verzehren.

11. Vorrichtung (10) nach Anspruch 10,
**dadurch gekennzeichnet, dass**
- das Energieverzehrelement einen Bolzen (17) aufweist, und
- das Elastomerelement (191) des Führungselements (19) eine Führungsnut (192) umfasst, und
- der Bolzen (17) sich in die Führungsnut (192) erstreckt, sodass er eine Wandung der Führungsnut (192) zumindest teilweise kontaktiert.

12. Vorrichtung (10) nach Anspruch 11,
**dadurch gekennzeichnet, dass**
der Bolzen (17) zylinderförmig, kegelstumpfförmig, pilförmig oder dornförmig ausgebildet ist.

13. Vorrichtung (10) nach Anspruch 11 oder 12, bei der der Bolzen (17) einen Abrissquerschnitt (171) aufweist, der eine Sollbruchstelle definiert, sodass bei einem Auftreten einer in Fahrtrichtung (F) des Schienenfahrzeugs (1) auf die Tischplatte (11) wirkenden Kraft (F1, F2), die eine vorgegebene Maximalkraft überschreitet, der Bolzen (17) im Bereich des Abrissquerschnitts (171) abreißt und ein oberer Abschnitt des Bolzens (17) an der Unterseite (112) der Tischplatte (11) verbleibt.

14. Schienenfahrzeug (1), umfassend:
- einen Wagenkasten (2) mit einer Seitenwand (3), und
- eine Vorrichtung (10) nach einem der Ansprüche 1 bis 13, die mittels einer Seitenwandanbindung (12) mit der Seitenwand (3) des Wagenkastens (2) gekoppelt ist.

## Claims

1. Apparatus (10) for attaching a table to a side wall (3) of a rail vehicle (1), comprising:
- a tabletop (11) with an upper side (111) and a lower side (112), and
- a cantilever beam (13)
- which is arranged on a lower side (112) of the tabletop (11) and is coupled to the tabletop (11) at a first, aisle-side coupling position (16) and a second, wall-side coupling position (18), and
- which is configured to couple the tabletop (11) by means of a side wall attachment (12) to the side wall (3) of the rail vehicle (1),
- the cantilever beam (13) having a weakening structure (14, 15) which configures a predefined elasticity of the cantilever beam (13), with the result that, in relation to a state of the apparatus (10) in which it is arranged on the side wall (3), in the case of a force (F1, F2) which acts on the tabletop (11) in the direction of travel (F) of the rail vehicle (1) occurring, the weakening structure (14, 15) permits a predefined deformation of the cantilever beam (13) and rotation of the tabletop (11) relative to the side wall (3),
**characterized in that**
the cantilever beam (13)
- has an upper side (131) which faces the tabletop (11),
- has a lower side (132) which faces away from the tabletop (11), and
- has two side walls (133) which each connect the upper side (131) to the lower side (132), and in the case of which
- the weakening structure comprises a plurality of beads (15) which are configured on at least one side wall (133) of the cantilever beam (13).

2. Apparatus (10) according to Claim 1,
**characterized in that**
- a bead (15) in each case has a longitudinal axis (LS), and
- recesses (151) are configured adjacently in relation to the longitudinal axis (LS) with respect to opposite ends of a respective bead (15).

3. Apparatus (10) according to either of Claims 1 or 2,
**characterized in that**
- the weakening structure comprises a plurality of cut-outs (14) which are configured on the upper side (131) and/or on the lower side (132) of the cantilever beam (13).

4. Apparatus (10) according to Claim 3,
**characterized in that**
- a cut-out (14) in each case has a longitudinal axis (LA),
- the respective cut-out (14) is delimited in a V-shaped manner in relation to the longitudinal axis (LA) by way of the cantilever beam (13), and
- the respective cut-out (14) tapers in the direction of the centre of the upper side (131) or the lower side (132).

5. Apparatus (10) according to Claim 3 or 4,
**characterized in that**
- a cut-out (14) in each case has a longitudinal axis (LA), and
- two cut-outs (14) are configured in each case so as to lie opposite one another in relation to the longitudinal axes (LA) on the upper side (131) and/or the lower side (132), with the result that
- connecting portion (141) of the cantilever beam (13) is configured between two opposite cut-outs (14).

6. Apparatus (10) according to one of Claims 1 to 5,
**characterized in that**
the beads (15) and/or the cut-outs (14) are configured at a distance in relation to a longitudinal axis (LB) of the cantilever beam (13).

7. Apparatus (10) according to one of Claims 1 to 6,
**characterized in that**
the cantilever beam (13) is configured as a tubular profile.

8. Apparatus (10) according to one of Claims 1 to 7,
**characterized in that**
- the coupling positions (16, 18) between the tabletop (11) and the cantilever beam (13) are configured at opposite ends (114, 115) of the tabletop (11) in relation to a longitudinal axis (LT) of the tabletop (11), and
- the tabletop (11) is connected to the cantilever beam (13) in a stationary manner at the first, aisle-side coupling position (16) .

9. Apparatus (10) according to Claim 8,
**characterized in that**
the tabletop (11) is coupled to the cantilever bar (13) at the second, wall-side coupling position (18) such that it can be pivoted along a predefined guide track (19).

10. Apparatus (10) according to Claim 9,
**characterized in that**
it comprises:
- an energy-absorbing element (17) which is arranged on the lower side (112) of the tabletop (11), and
- a guide element (19) which is arranged between the lower side (112) of the tabletop (11) and the upper side (131) of the cantilever beam (13),
- the guide element (19) comprising an elastomer element (191) which interacts with the energy-absorbing element (17) in order to absorb energy by means of friction in relation to a state of the apparatus (10) in which it is arranged on the side wall (3), in the case of a force (F1, F2) which acts on the tabletop (11) in the direction of travel (F) of the rail vehicle (1) occurring.

11. Apparatus (10) according to Claim 10,
**characterized in that**
- the energy-absorbing element has a pin (17), and
- the elastomer element (191) of the guide element (19) comprises a guide groove (192), and
- the pin (17) extends into the guide groove (192) with the result that it makes contact at least partially with a wall of the guide groove (192).

12. Apparatus (10) according to Claim 11,
**characterized in that**
the pin (17) is of cylindrical, frustoconical, mushroom-shaped or mandrel-shaped configuration.

13. Apparatus (10) according to Claim 11 or 12, in the case of which the pin (17) has a tear-off cross section (171) which defines a predetermined break point, with the result that, in the case of a force (F1, F2) which acts on the tabletop (11) in the direction of travel (F) of the rail vehicle (1) occurring which exceeds a predefined maximum force, the pin (17) tears off in the region of the tear-off cross section (171), and an upper portion of the pin (17) remains on the lower side (112) of the tabletop (11).

14. Rail vehicle (1), comprising:
- a wagon body (2) with a side wall (3), and
- an apparatus (10) according to one of Claims 1 to 13 which is coupled by means of a side wall attachment (12) to the side wall (3) of the wagon body (2).

## Revendications

1. Dispositif (10) de liaison d'une table à une paroi (3) latérale d'un véhicule (1) ferroviaire, comportant :
- un plateau (11) de table ayant une face (111) supérieure et une face (112) inférieure, et
- une poutre (13) de cintrage,
- qui est montée sur la face (112) inférieure du plateau (11) de la table et qui est accouplée au plateau (11) de la table en une première position (16) d'accouplement du côté du couloir, et en deuxième position (18) d'accouplement du côté de la paroi, et
- qui est constituée pour accoupler le plateau (11) à la paroi (3) latérale du véhicule (1) ferroviaire, au moyen d'une liaison (12) de paroi latérale,
- dans lequel la poutre (13) de cintrage a une structure (14, 15) d'affaiblissement, qui donne à la poutre (13) de cintrage une élasticité donnée à l'avance, de manière à ce que, rapporté à un état monté sur la paroi (3) latérale du dispositif (10), s'il se produit une force (F1, F2) s'appliquant dans le sens (F) de la marche du véhicule (1) ferroviaire au plateau (11) de la table, la structure (14, 15) d'affaiblissement autorise une déformation donnée à l'avance de la poutre (13) de cintrage et une rotation du plateau (11) de la table par rapport à la paroi (3) latérale, **caractérisé en ce que**
la poutre (13) de cintrage
- a une face (131) supérieure, qui est tournée vers le plateau (11) de la table,
- a une face (132) inférieure, qui n'est pas tournée vers le plateau (11) de la table, et
- a deux parois (133) latérales, qui relient respectivement la face (131) supérieure à la face (132) inférieure, et dans lequel
- la structure d'affaiblissement comprend une pluralité de moulures (15), qui est formée sur au moins une paroi (133) latérale de la poutre (13) de cintrage.

2. Dispositif (10) suivant la revendication 1,
**caractérisé en ce que**
- une moulure (15) a respectivement un axe (LS) longitudinal, et
- rapporté à l'axe (LS) longitudinal, des évidements (151) sont formés au voisinage des extrémités opposées d'une moulure (15) respective.

3. Dispositif (10) suivant l'une des revendications 1 ou 2,
**caractérisé en ce que**
- la structure d'affaiblissement comprend une pluralité d'entailles (14), qui est formée sur la face (131) supérieure et sur la face (132) inférieure de la poutre (13) de cintrage.

4. Dispositif (10) suivant la revendication 3,
**caractérisé en ce qu'**
- une entaille (14) a respectivement un axe (LA) longitudinal,
- l'entaille (14) est, rapporté à l'axe (LA) longitudinal, en forme de v en étant délimitée par la poutre (13) de cintrage, et
- l'entaille (14) respective se rétrécit en direction d'un milieu de la face (131) supérieure ou de la face (132) inférieure.

5. Dispositif (10) suivant la revendication 3 ou 4,
**caractérisé en ce qu'**
- une entaille (14) a respectivement un axe (LA) longitudinal, et
- rapportées aux axes (LA) longitudinaux, respectivement deux entailles (14) sont formées en étant opposées l'une à l'autre sur la face (131) supérieure et/ou la face (132) inférieure, de manière
- à former une partie (141) de liaison de la poutre (13) de cintrage entre deux entailles (14) opposées.

6. Dispositif (10) suivant l'une des revendications 1 à 5,
**caractérisé en ce que**
les moulures (15) et/ou les entailles (14) sont équidistantes, rapporté à un axe (LB) longitudinal de la poutre (13) de cintrage.

7. Dispositif (10) suivant l'une des revendications 1 à 6,
**caractérisé en ce que**
la poutre (13) de cintrage est formée d'un profilé tubulaire.

8. Dispositif (10) suivant l'une des revendications 1 à 7,
**caractérisé en ce que**
- des positions (16, 18) de liaison entre le plateau (11) de la table et la poutre (13) de cintrage sont, rapporté à un axe (LT) longitudinal du plateau (11) de la table, disposées aux extrémités (114, 115) opposées du plateau (11) de la table, et
- le plateau (11) de la table est, à la première position (16) de liaison du côté du couloir, relié d'une manière fixe en emplacement à la poutre (13) de cintrage.

9. Dispositif (10) suivant la revendication 8,
**caractérisé en ce que**
le plateau (11) de la table est, à la deuxième position (18) de liaison du côté de la paroi, relié à pivotement à la poutre (13) de cintrage suivant une voie (19) de guidage donnée à l'avance.

10. Dispositif (10) suivant la revendication 9,
**caractérisé en ce qu'**
il comprend :
- un élément (17) dissipateur d'énergie, qui est monté sur la face (112) inférieure du plateau (11) de la table, et
- un élément (19) de guidage, qui est monté entre la face (112) inférieure du plateau (11) de la table et la face (131) supérieure de la poutre (13) de cintrage,
- dans lequel l'élément (19) de guidage comprend un élément (191) élastomère, qui coopère avec l'élément (17) dissipateur d'énergie pour, rapporté à un état monté sur la paroi (3) latérale du dispositif (10), lorsqu'il se produit une force (F1, F2) agissant dans le sens (F) de la marche du véhicule (1) ferroviaire sur le plateau (11) de la table, dissiper de l'énergie par frottement.

11. Dispositif (10) suivant la revendication 10, **caractérisé en ce que**
- l'élément dissipateur d'énergie a une cheville (17), et
- l'élément (191) élastomère de l'élément (19) de guidage comprend une rainure (192) de guidage, et
- la cheville (17) s'étend dans la rainure (192) de guidage, de manière à être en contact au moins en partie avec une paroi de la rainure (192) de guidage.

12. Dispositif (10) suivant la revendication 11,
**caractérisé en ce que**
la cheville (17) est en forme de cylindre, en forme de tronc de cône, en forme de champignon ou en forme de mandrin.

13. Dispositif (10) suivant la revendication 11 ou 12, dans lequel la cheville (17) a une section (171) transversale de rupture, qui définit un point destiné à se rompre, de manière à ce que s'il se produit une force (F1, F2) s'appliquant au plateau (11) de la table dans le sens (F) de marche du véhicule (1) ferroviaire, qui dépasse une force maximum donnée à l'avance, la cheville (17) se rompe dans la partie de la section (171) transversale de rupture et à ce qu'une partie supérieure de la cheville (17) reste sur la face (112) inférieure du plateau (11) de la table.

14. Véhicule (1) ferroviaire, comprenant :
- une caisse (2) de voiture ayant un paroi (3) latérale, et
- un dispositif (10) suivant l'une des revendications 1 à 13, qui est relié au moyen d'une liaison (12) de paroi latérale à la paroi (3) latérale de la caisse (2) de la voiture.
